# EUROPÄISCHE PATENTSCHRIFT

(11) **EP 3 271 042 B1**
(45) Veröffentlichungstag und Bekanntmachung des Hinweises auf die Patenterteilung: **14.04.2021**
(21) Anmeldenummer: 16700321.9
(22) Anmeldetag: 12.01.2016
(51) Int. Cl.: B01D 35/143, B01D 35/147, B01D 35/153, B01D 37/04, B01D 29/23, B01D 29/60

(54) **FILTERVORRICHTUNG**
FILTER APPARATUS
DISPOSITIF FILTRE

(30) Priorität: 19.03.2015 DE 102015003604; 19.03.2015 DE 102015003606
(43) Veröffentlichungstag der Anmeldung: 24.01.2018
(73) Patentinhaber: Hydac Filtertechnik GmbH, 66280 Sulzbach/Saar (DE)
(72) Erfinder: KLEIN, Volkmar, 66482 Zweibrücken (DE); SAKRASCHINSKY, Michael, 66386 St. Ingbert (DE)
(74) Vertreter: Bartels und Partner, Patentanwälte
(86) Internationale Anmeldenummer: PCT/EP2016/000043
(87) Internationale Veröffentlichungsnummer: WO 2016/146227

(56) Entgegenhaltungen:
- US-A- 3 070 232
- US-A- 3 344 923
- US-A- 4 654 140

## Beschreibung

Die Erfindung betrifft eine Filtervorrichtung mit den Merkmalen im Oberbegriff des Anspruchs 1.

Filtervorrichtungen dieser Art sind in einer Vielzahl von Ausgestaltungen und mit auswechselbaren Filterelementen, die unterschiedlichen Spezifikationen entsprechen, Stand der Technik. Die Filterelemente werden bei derartigen Filtervorrichtungen zur Pflege von Fluiden, insbesondere in ölhydraulischen Systemen, benutzt. Um die Betriebssicherheit der betreffenden Anlagen, die wesentlich von der einwandfreien Leistungsfähigkeit der Filtervorrichtungen abhängig ist, sicherzustellen, werden die betreffenden Filterelemente häufig auf ihre Schmutzaufnahmefähigkeit mittels Differenzdruckmessung (DE 10 2005 043 752 B3) überwacht, um die Gefahr zu vermeiden, dass es durch Überlastung zu Betriebsstörungen oder gar zu Schäden kommen kann, was bei teuren Anlagen zu erheblichen wirtschaftlichen Einbußen führen kann.

Die US 3 070 232 offenbart eine Filtervorrichtung, mit einem einen Filterkopf und einen Filtertopf aufweisenden Filtergehäuse, das ein Filterelement aufnimmt, das eine Unfiltratseite von einer Filtratseite separiert, und mit einer Differenzdruck-Messeinrichtung, die zumindest ein Verblocken des Filterelements im Filtrierbetrieb anzeigt und die einen in einem Messgehäuse längsverfahrbar geführten Messkolben aufweist, der auf einer Stirnseite mit dem Momentandruck der Unfiltratseite und auf der gegenüberliegenden Stirnseite mit dem Momentandruck der Filtratseite beaufschlagt ist, der jeweils über mindestens eine Kanalführung in das Messgehäuse gelangt, wobei zumindest ein Teil der Kanalführung in einer Elementkappe des Filterelements angeordnet ist, und wobei derjenige Teil der Kanalführung, der in der Elementkappe angeordnet ist, mit seinem einen freien Ende auf der Unfiltratseite des Filterelements endet.

Die US 4 654 140 offenbart eine weitere Filtervorrichtung.

Ausgehend von diesem Stand der Technik stellt sich die Erfindung die Aufgabe, eine Filtervorrichtung der eingangs genannten Gattung zur Verfügung zu stellen, die einfach aufgebaut und kostengünstig herstellbar ist.

Erfindungsgemäß ist diese Aufgabe durch eine Filtervorrichtung gelöst, die die Merkmale des Patentanspruchs 1 in seiner Gesamtheit aufweist.

Gemäß dem kennzeichnenden Teil des Anspruchs 1 ist die erfindungsgemäße Filtervorrichtung dadurch gekennzeichnet, dass derjenige Teil der Kanalführung, der in der Elementkappe angeordnet ist, mit seinem anderen freien Ende in einem Sammelraum endet, der vom Außenumfang der Elementkappe vorspringt und auf gegenüberliegenden Stirnseiten in abdichtender Weise zum einen von einem auf der Oberseite des Filterkopfes abnehmbar angeordneten Deckelteil und zum anderen am Boden von Wandteilen des Filterkopfes begrenzt ist; dass der Sammelraum Teil der Kanalführung ist; und dass an der dem Wandteil entgegengesetzten Oberseite der Sammelraum durch das Gehäuse-Deckelteil begrenzt ist, das eine radiale Ausbuchtung aufweist, die einen die Seitenwand des Sammelraums bildenden radial vorstehenden Wandteil übergreift.

Dadurch sind zwei einander gegenüberliegende Begrenzungswände des Sammelraums durch ohnehin vorhandene Vorrichtungsteile, nämlich dem Deckelteil und dem Filterkopf, gebildet, so dass sich für die Elementkappe selbst eine entsprechende Materialeinsparung ergibt.

Ferner besteht eine wesentliche Besonderheit der Erfindung darin, dass zumindest ein Teil der Kanalführung, über die der Momentandruck der Unfiltratseite zum Messgehäuse der Messeinrichtung gelangt, am Filterelement in einer Elementkappe desselben angeordnet ist. Da die Elementkappe bei den in Frage kommenden Filterelementen durch Spritzformen, insbesondere aus einem Kunststoff, mit darin integrierter Kanalführung rationell herstellbar ist, ist eine besonders kostengünstige Herstellung der Gesamtvorrichtung ermöglicht. Besonders bevorzugt bildet die dahingehende Elementkappe mit integrierter Kanalführung ein eine Einfassung für ein Ende des Filtermaterials des Filterelements bildendes Aufnahmeteil aus. Besonders bevorzugt ist dabei das Ende des Filtermaterials in einem Klebstoffbett des Aufnahmeteiles aufgenommen. Es besteht aber auch die Möglichkeit, das Ende des Filtermaterials mit einer eigenständigen Endkappe zu versehen, die dann in das Aufnahmeteil der genannten Elementkappe mit Kanalführung wiederum integriert oder aufgenommen ist.

Hinsichtlich der Ausbildung der weiteren, zur Messeinrichtung verlaufenden Teile der Kanalführung kann die Anordnung mit Vorteil so getroffen sein, dass der Sammelraum als Teil der Kanalführung bodenseitig einen im Filterkopf gebildeten Durchgang aufweist, an den sich ein im Messgehäuse verlaufender Schrägkanal anschließt, der mit seinem anderen freien Ende auf die rückwärtige Stirnseite des Messkolbens führt.

Der Messkolben kann mit einem Energiespeicher, wie einer Druckfeder, beaufschlagt sein, die den Messkolben in rückwärtige Richtung zu verfahren sucht, wobei die vordere Stirnseite des Messkolbens an ein Abschlussstück des Messgehäuses angrenzt, das einen Durchgang als weiteren Teil der Kanalführung aufweist, an dem der Momentandruck auf der Filtratseite ansteht.

Was die Gestaltung des in der Elementkappe befindlichen Teils der Kanalführung anbelangt, kann die Anordnung mit Vorteil so getroffen sein, dass der in den Sammelraum mündende Teil der Kanalführung in der Elementkappe des Filterelements das obere Ende des Filtermaterials übergreift und parallel dem Deckelteil nachfolgt, wobei der andere Teil der Kanalführung, rechtwinklig dazu angeordnet, von einem in Radialrichtung verlaufenden Aufnahmesteg aufgenommen und mit einem Überstand auf die die Unfiltratseite bildende Innenseite des Filterelements geführt ist.

Bei besonders vorteilhaften Ausführungsbeispielen ist der Sammelraum Bestandteil eines ringförmigen Abdichtsystems, das außenumfangsseitig an einer Aufnahmekrone angeordnet ist, die mittels eines Kranzes radial angeordneter Stege gehalten ist, die sich an ein stirnseitiges Aufnahmeteil für das obere Ende des Filtermaterials anschließen, wobei an das Aufnahmeteil ein sich vom Innenumfang des Aufnahmeteils axial in die Innenseite des Filterelements erstreckender, konischer Führungskörper anschließt, an dessen Innenseite sich die Stege fortsetzen, deren einer den Aufnahmesteg für den zur Unfiltratseite verlaufenden Teil der Kanalführung bildet. Bei dieser Bauweise bilden die Aufnahmekrone, die Stege, das Aufnahmeteil und das Führungsteil, einstückig miteinander verbunden, die Elementkappe.

Die Anordnung kann weiterhin mit Vorteil so getroffen sein, dass das Abdichtsystem außenumfangsseitig eine Formdichtung aufweist, die eine Umfassungswand der Aufnahmekrone der Elementkappe umfasst. Durch die so gebildete Außenumfassung der Aufnahmekrone bildet das Abdichtsystem gleichzeitig die Gehäuseabdichtung des gesamten Fluidsystems gegenüber der Umgebung.

Für den Einbau des Messgehäuses kann der Filterkopf an der Stelle des Eingriffs der Differenzdruck-Messeinrichtung eine vorstehende Anschlusswand aufweisen, in die das Messgehäuse stirnseitig eingeschraubt ist.

Bei besonders vorteilhaften Ausführungsbeispielen schließt sich als Teil der Differenzdruck-Messeinrichtung, nach außen weiter vorstehend, an das insoweit geschlossen ausgebildete Messgehäuse eine Auswerteeinheit an, die insbesondere optisch einem Betrachter zu erkennen gibt, ob das im Filtrierbetrieb befindliche Filterelement verblockt oder noch filterfähig ist.

Bei einer besonders vorteilhaften Ausbildung der Differenzdruck-Mess-einrichtung weist der Messkolben der Messeinrichtung einen Permanentmagneten auf, der im filterfähigen Zustand des Filterelements entgegen der Wirkung eines Energiespeichers, insbesondere in Form einer Druckfeder, einen Permanentmagneten eines Auswertekolbens, der längsverfahrbar in einem Gehäuse der Auswerteeinheit geführt ist, in einer Position hält, die dieser in Richtung einer weiteren Position verlässt, sobald aufgrund des gleichbleibenden Momentandrucks auf der rückwärtigen Stirnseite und aufgrund des sinkenden Momentandruckes auf der gegenüberliegenden, vorderseitigen Stirnseite des Messkolbens, bedingt durch ein Verblocken des Filterelements, der Permanentmagnet des Messkolbens sich von dem Permanentmagneten des Auswertekolbens wegbewegt. Dadurch steht eine den Übergang vom filtrierfähigen zum verblockten Zustand des Filterelements eindeutig signalisierende Anzeige zur Verfügung, die auch für eine elektrische Signalgabe vorteilhaft geeignet ist, beispielsweise mittels eines die Position des Auswertekolbens berührungslos erkennenden Sensors.

Nachstehend ist die Erfindung anhand eines in der Zeichnung dargestellten Ausführungsbeispiels im Einzelnen erläutert. Es zeigen:
- Fig. 1: in schematisch vereinfachter perspektivischer Schrägansicht sowie in Längsrichtung aufgeschnitten und verkürzt ein Ausführungsbeispiel der erfindungsgemäßen Filtervorrichtung;
- Fig. 2: in gegenüber Fig. 1 vergrößertem Maßstab und in Längsrichtung verkürzt eine perspektivische Schrägansicht des gesondert dargestellten Filterelements des Ausführungsbeispiels;
- Fig. 3: eine weiter vergrößert dargestellte, in Längsrichtung aufgeschnitten und abgebrochen gezeichnete perspektivische Schrägansicht lediglich des eine Elementkappe aufweisenden oberen Endbereichs des Filterelements des Ausführungsbeispiels; und
- Fig. 4: eine im Maßstab von Fig. 3 gezeichnete, in Längsrichtung aufgeschnittene und abgebrochene Darstellung lediglich des die Differenzdruck-Messeinrichtung aufweisenden oberen Teilbereichs des Ausführungsbeispiels der Filtervorrichtung.

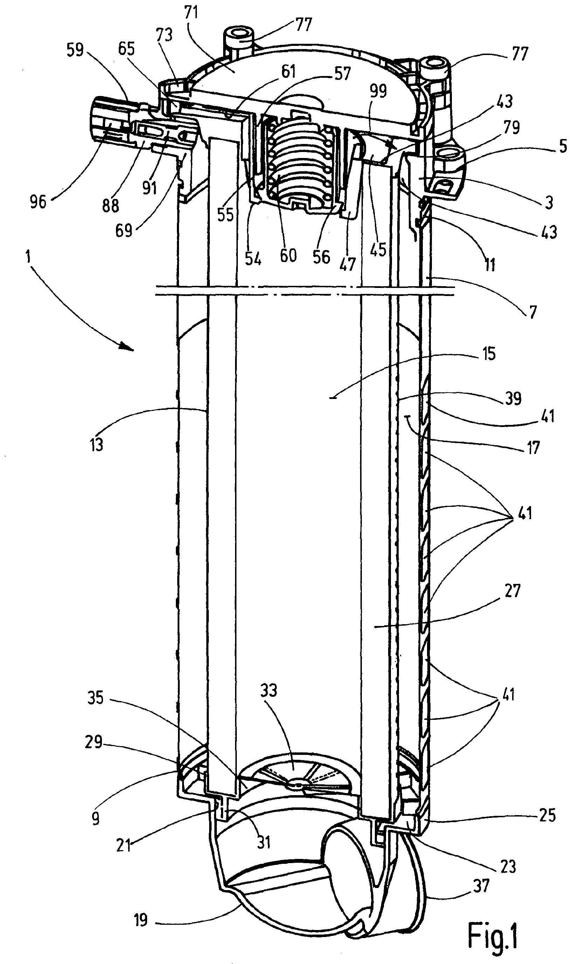

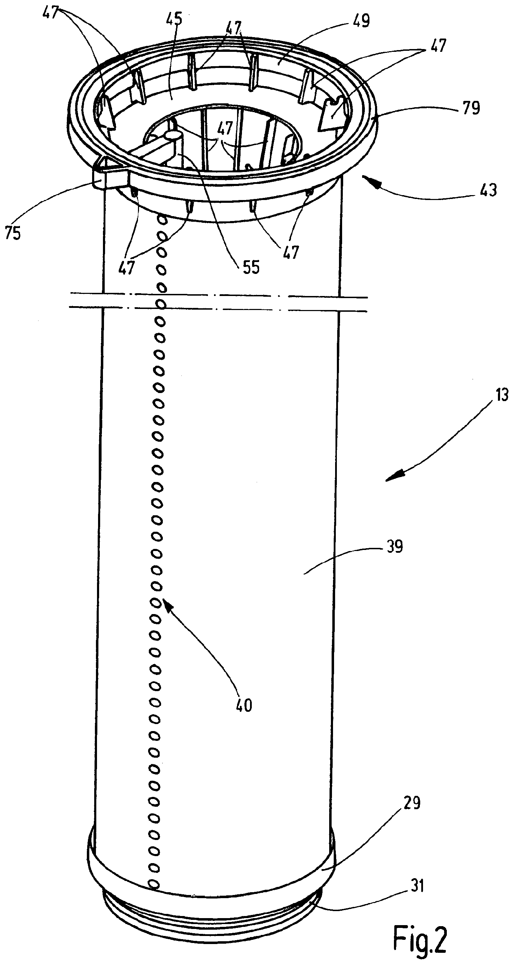

Mit Bezug auf die beigefügten Zeichnungen wird die Erfindung am Beispiel einer sog. In-Tank-Filtervorrichtung erläutert, bei der das Filtergehäuse 1 einen Filterkopf 3 aufweist, an dem sich außenseitig ein Befestigungsflansch 5 befindet. Mit diesem ist das Filtergehäuse 1 am Rand einer oberen Wandöffnung eines Vorratsbehälters oder Tanks (nicht dargestellt) derart anbringbar, dass sich ein Filtertopf 7, der sich an das untere Ende des Filterkopfes 3 anschließt, in Vertikalrichtung ins Innere des Tanks erstreckt. Dabei ist die Länge des in Fig. 1 und 2 verkürzt dargestellten Filtertopfes 7 derart bemessen, dass sich das untere Ende 9 des Filtertopfes 7 unterhalb des niedrigsten, im Betrieb zu erwartenden Fluidniveaus, z.B. Hydrauliköl, befindet. Bei der Auslegung als In-Tank-Filtervorrichtung ist der Filtertopf 7 in Form eines verhältnismäßig dünnwandigen Kreiszylinders am Filterkopf 3 durch eine Einbördelung 11 festgelegt. Es versteht sich, dass die Erfindung nicht nur bei In-Tank-Filtervorrichtungen, sondern gleichermaßen auch bei andersartigen Filtervorrichtungen anwendbar ist, bei denen eine den Betriebszustand des zugehörigen Filterelements überwachende Differenzdruck-Messeinrichtung vorgesehen ist.

Für den Filtrierbetrieb, bei dem ein im Gehäuse 1 auswechselbar aufnehmbares Filterelement 13 von seiner die Unfiltratseite bildenden Innenseite 15 her zu seiner die Filtratseite bildenden Außenseite 17 hin durchströmbar ist, befindet sich am unteren Ende 9 des Filtertopfes 7 ein Einströmgehäuse 19, das an seiner zur Innenseite 15 des Filterelements 13 führenden oberen Öffnung 21 einen radial nach außen verlaufenden Boden 23 bildet, dessen Umfangsrand 25 das untere Ende 9 des Filtertopfes 7 einfasst. Das Filter-element 13 weist am unteren Ende seines hohlzylinderförmigen Filtermaterials 27 eine Endkappe 29 auf, die mit einem endseitigen Ringkörper 31 in die Öffnung 21 des Einströmgehäuses 19 eingreift. Ein Klappenventil 33, das am zentralen Durchgang 35 der Endkappe 29 angeordnet ist, öffnet für die Strömung des Fluids, das vom Einlassanschluss 37 des Einströmgehäuses 19 zur Innenseite 15 des Filterelements 13 strömt. Bei dem von innen nach außen durch das Filtermaterial 27 hindurch erfolgenden Filtriervorgang ist das Filtermaterial 27 gegen die Strömungskräfte durch eine äußere Umhüllung 39 abgestützt, die eine Perforation aufweist, die lediglich in Fig. 2 durch eine Lochreihe 40 angedeutet ist. In der realen Ausführung erstreckt sich die Lochung über die gesamte Oberfläche der eine Art äußeres Stützrohr bildenden Umhüllung 39. Anstelle einer Hülle mit Lochung könnte auch eine Gitterstruktur oder dergleichen vorgesehen sein. Für den Austritt des Filtrats aus der Außenseite 17 zum Tankinneren sind im Filtertopf 7 Fensteröffnungen 41 gebildet. Entsprechend dem für In-Tank-Filter geltenden Stand der Technik sind die Fensteröffnungen 41 nicht über die ganze Länge des Filtertopfes 7 angeordnet, sondern lediglich in ausgewählten Flächenbereichen. Beispielsweise können die Fensteröffnungen 41 entsprechend der diesbezüglich durch EP 2 249 941 B1 vermittelten Lehre in Anpassung an das betriebliche Fluidniveau des Tanks derart angeordnet sein, dass etwaig im gereinigten Fluid sich befindende Gasblasen abscheid-bar und/oder für eine Abgabe ansammelbar sind.

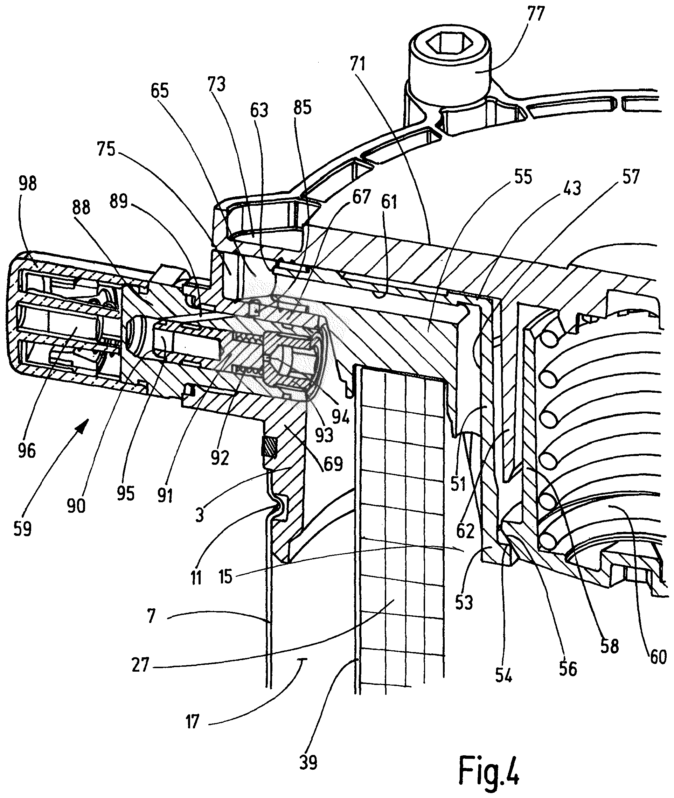

Wie die Fig. 2 bis 4 deutlicher zeigen, weist das Filterelement 13 an seiner Oberseite eine speziell ausgebildete Elementkappe 43 auf, die aus einem Kunststoffwerkstoff spritzgeformt ist. Als zentralen Bestandteil weist die Elementkappe 43 ein Aufnahmeteil 45 in Form eines ebenflächigen Kreisringes auf, das, wie bei Filterelement-Endkappen üblich, eine Einfassung für das zugewandte Ende des Filtermaterials 27 bildet. Den Außenumfang des Aufnahmeteils 45 umgibt ein Kranz aus gleichmäßig verteilten, plattenartigen Stegen 47, deren Ebenen sich in Radialrichtung erstrecken und die die Träger für eine kreisringförmige Aufnahmekrone 49 bilden, die sich in einem axialen Abstand vom Aufnahmeteil 45 sowie in einem radialen Abstand von der Außenseite des übrigen Filterelements 13 befindet. An der Unterseite des Aufnahmeteils 45 schließt sich an dessen Innenumfang ein Führungsteil 51 an, das die Form eines hohlen Konus besitzt, der sich mit seinem verjüngten Ende axial in die Innenseite 15 erstreckt und am unteren Rand in einer radial nach innen vorspringenden Rippe 53 endet.

Die Stege 47 setzen sich unterhalb des Aufnahmeteils 45 entlang der Innenseite des Führungsteils 51 als weiterer Kranz der Stege 47 fort, die radial nach innen vorstehen und sich von der Unterseite des Aufnahmeteils 45 bis zur Rippe 53 am Führungsteil 51 erstrecken. Dabei bildet einer der Stege einen mit 55 bezeichneten Aufnahmesteg, in dem sich ein Kanalabschnitt 57 in Vertikalrichtung erstreckt und an seinem unteren freien Ende in die die Unfiltratseite bildende Innenseite 15 mündet. Dieser Kanalabschnitt 57 bildet ein Teil einer Kanalführung, über die der Momentandruck der Innenseite 15 zu einer der Filtervorrichtung zugehörigen Differenzdruck-Messeinrichtung 59 gelangt. Hierfür schließt sich an das obere, geschlossene Ende des Kanalabschnitts 57 ein dazu rechtwinklig verlaufender Kanalabschnitt 61 an, der sich in Radialrichtung erstreckt und mit seinem freien Ende 63 in einen Sammelraum 65 einmündet, der einen weiteren Teil der Kanalführung bildet.

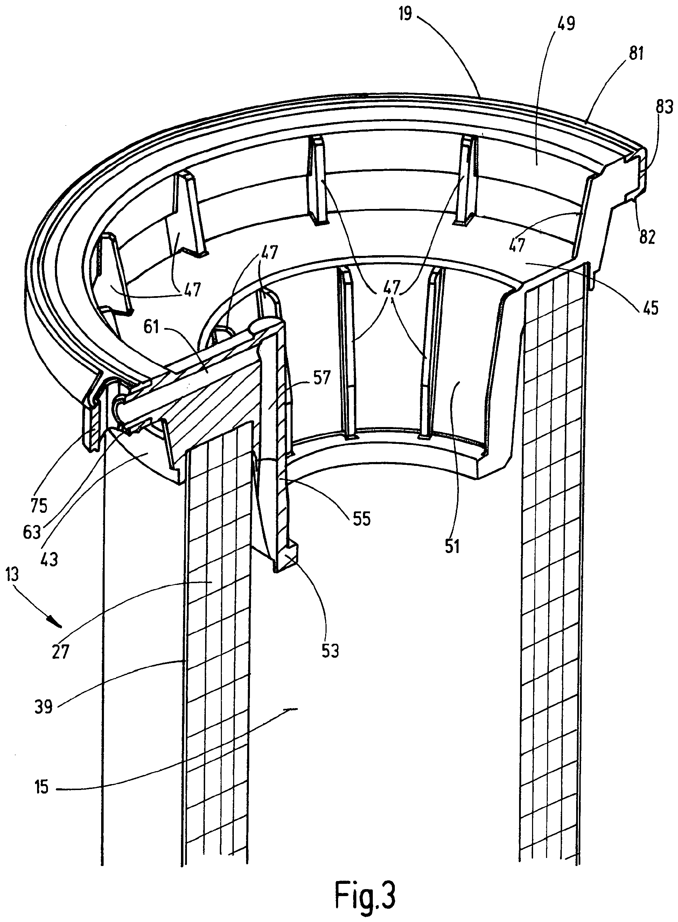

Der Boden des Sammelraums 65 ist durch ein Wandteil 67 eines vom Filterkopf 3 radial vorstehenden Anschlussbereichs 69 gebildet. An der dem Wandteil 67 entgegengesetzten Oberseite ist der Sammelraum 65 durch ein Gehäuse-Deckelteil 71 begrenzt, das eine radiale Ausbuchtung 73 aufweist, die einen die Seitenwand des Sammelraum 65 bildenden radial vorstehenden Wandteil 75 übergreift. Das Deckelteil 71 ist mittels Befestigungsschrauben 77 mit dem Filterkopf 3 lösbar verbunden. Wie die Fig. 3 am deutlichsten zeigt, ist der Umfangsrand der Aufnahmekrone 49 von einer Formdichtung 79 übergriffen, die einen U-förmigen Querschnitt besitzt und mit ihrem oberen Profilschenkel 81 die Abdichtung mit dem Deckelteil 71 bildet, während der untere Profilschenkel 82 sowie der zwischen den Schenkeln 81, 82 axial verlaufende Profilsteg 83 die Abdichtung gegenüber dem Filtertopf 7 bilden. Die Formdichtung 79 bildet daher sowohl die Abdichtung des gesamten, sich oberhalb der Tankwand befindlichen Fluidsystems als auch, da sich die Formdichtung 79 über die radial vorstehende Ausbuchtung 73 erstreckt, die Abdichtung des Sammelraums 65.

Für die Fortsetzung der Kanalführung ist im Boden des Sammelraums 65 ein Durchgang 85 gebildet, der sich durch den Wandteil 67 hindurch in die Bohrung 87 des Anschlussbereichs 69 erstreckt, in die das Messgehäuse 88 der Messeinrichtung 59 einschraubbar ist. Im Messgehäuse 88 ist ein Schrägkanal 89 gebildet, der sich an den Durchgang 85 anschließt und die Kanalführung bis zur rückwärtigen Stirnseite 90 eines Messkolbens 91 fortsetzt. Dieser ist im Messgehäuse 88 durch eine Druckfeder 92 für eine Bewegung in radial nach außen erfolgende, rückwärtige Richtung vorgespannt. Das Messgehäuse 88 ist an dem radial inneren Ende, das an die die Filtratseite bildende Außenseite 17 des Filterelements 13 angrenzt, durch ein Abschlussstück 93 geschlossen, in dem sich ein weiterer Durchgang 94 befindet, über den die zugewandte Stirnseite des Messkolbens 91 mit dem Momentandruck der Filtratseite beaufschlagt ist. Im Filterbetrieb nimmt daher der Messkolben 91, der über den Schrägkanal 89 an der vorderen Stirnseite 90 mit dem Momentandruck der Unfiltratseite beaufschlagt ist, eine dem Differenzdruck entsprechende Kolbenstellung ein.

Zur Gewinnung einer Anzeige der Kolbenstellung ist am radial außen liegenden Endbereich des Messkolbens 91 ein Permanentmagnet 95 angeordnet. Bei filterfähigem Zustand des Filterelements 13 nimmt der Messkolben 91 unter Einwirkung der Druckfeder 92 eine Position ein, in der der Permanentmagnet 95 einen Auswertekolben 96 in an ihm anliegender, angezogener Position hält. Der Auswertekolben 96 ist im Messgehäuse 88 verfahrbar und für eine vom Permanentmagneten 95 weggerichtete Bewegung durch eine Feder 97 vorgespannt. Der Druck vor dem Filter, beispielsweise in Form des Pumpendruckes, bleibt im Betrieb immer gleich. Durch die Verschmutzung der Filtermatte ist der Druck nach der Filtermatte bei verschmutztem Filterelement geringer als bei unverschmutztem Filterelement. Das bedeutet, dass der Druck auf der rückwärtigen Stirnseite 90 am Messkolben 91 gleich bleibt, aber der Druck auf der gegenüberliegenden, vorderseitigen Stirnseite des Messkolbens 91 sinkt, so dass der Messkolben 91 in Blickrichtung auf die Fig. 1 sich nach rechts bewegt und den Auswertekolben 96 freigibt. Mithin fällt der Auswertekolben 46 vom Permanentmagneten 95 des Messkolbens 91 ab, so dass sich der Auswertekolben 96 in Radialrichtung nach außen bewegt und dadurch eine Anzeige für verblockten Zustand des Filterelements 13 liefert. Für eine Sichtanzeige der Position des Auswertekolbens 96 weist das Messgehäuse 88 am radial äußeren Ende eine aus einem durchsichtigen Werkstoff bestehende Haube 98 auf, beispielsweise aus Plexiglas, wobei Markierungen vorgesehen sein können, beispielsweise in Form von Farbmarkierungen, die augenfällig eine visuelle Anzeige für den Zustand des Filterelements 13 liefern. Alternativ oder zusätzlich kann eine elektrische Signalgabe vorgesehen sein, beispielsweise mittels eines Hall-Sensors, der die Position des Auswertekolbens 96 erkennt.

Die Rippe 53 am Ende des einen Hohlkonus bildenden Führungsteils 51 bildet eine Dichtkante 54 für einen Ventilkegel 56, der sich an einem Schließteil 58 eines Bypassventils befindet. Das Schließteil 58 hat die Form eines Hohlzylinders, der an dem den Ventilkegel 56 bildenden Ende geschlossen ist und dort die Anlage für eine Druckfeder 60 bildet, die sich andererseits am Deckelteil 71 abstützt. Das hohlzylindrische Schließteil 58 ist in einer kreiszylindrischen Führungswand 62 geführt, die sich vom Deckelteil 71 weg axial in das Führungsteil 51 erstreckt. Bei verblocktem Zustand des Filterelements 13 und durch den Unfiltratdruck bewirktem Abheben des Ventilkegels 56 von der Dichtkante 54 ist ein das Filterelement 13 umgehender Fluidweg gebildet, der über die Oberseite des Aufnahmeteils 45 zu der die Filtratseite bildenden Außenseite 17 führt, siehe Strömungspfeil 99 in Fig. 1.

Mittels der erfindungsgemäßen Differenzdruck-Messeinrichtung 59 lässt sich aber nicht nur ein verblocktes Filterelement 13 detektieren; vielmehr kann auch festgestellt werden, wenn gar kein Filterelement 13 sich im Filterelementgehäuse befindet, und des Weiteren lässt sich über die Auswerteelektronik zu der Differenzdruck-Messeinrichtung 59 bei entsprechend "taktiler Auslegung" auch erreichen, gegebenenfalls ein Plagiatprodukt zu ermitteln, das unter Umständen ein anderes Verblockungsverhalten mit unterschiedlichen Differenzdrücken zeigt gegenüber dem Original-Element des Herstellers, unterstellt die aus dem Fluid abzufiltrierenden Partikelverschmutzungen seien in beiden Fällen ähnlich.

## Patentansprüche

1. Filtervorrichtung, mit einem einen Filterkopf (3) und einen Filtertopf (7) aufweisenden Filtergehäuse (1) und einem darin aufgenommenen Filterelement (13), das eine Unfiltratseite (15) von einer Filtratseite (17) separiert, und mit einer Differenzdruck-Messeinrichtung (59), die zumindest ein Verblocken des Filterelements (13) im Filtrierbetrieb anzeigt und die einen in einem Messgehäuse (88) längsverfahrbar geführten Messkolben (91) aufweist, der auf einer Stirnseite (90) mit dem Momentandruck der Unfiltratseite (15) und auf der gegenüberliegenden Stirnseite mit dem Momentandruck der Filtratseite (17) beaufschlagt ist, der jeweils über mindestens eine Kanalführung (57, 61, 65, 89) in das Messgehäuse (88) gelangt, wobei zumindest ein Teil (57, 61) der Kanalführung in einer Elementkappe (43) des Filterelements (13) angeordnet ist, und wobei derjenige Teil (57, 61) der Kanalführung, der in der Elementkappe (43) angeordnet ist, mit seinem einen freien Ende auf der Unfiltratseite (15) des Filterelements (13) endet,
**dadurch gekennzeichnet,**
**dass** derjenige Teil (57, 61) der Kanalführung, der in der Elementkappe (43) angeordnet ist, mit seinem anderen freien Ende (63) in einem Sammelraum (65) endet, der vom Außenumfang der Elementkappe (43) vorspringt und auf gegenüberliegenden Stirnseiten in abdichtender Weise zum einen von einem auf der Oberseite des Filterkopfes (3) abnehmbar angeordneten Deckelteil (71) und zum anderen am Boden von Wandteilen (67) des Filterkopfes (3) begrenzt ist;
**dass** der Sammelraum (65) Teil der Kanalführung ist; und
**dass** an der dem Wandteil (67) entgegengesetzten Oberseite der Sammelraum (65) durch das Gehäuse-Deckelteil (71) begrenzt ist, das eine radiale Ausbuchtung (73) aufweist, die einen die Seitenwand des Sammelraums (65) bildenden radial vorstehenden Wandteil (75) übergreift.

2. Filtervorrichtung nach Anspruch 1, **dadurch gekennzeichnet, dass** der Sammelraum (65) als Teil der Kanalführung bodenseitig einen im Filterkopf (3) gebildeten Durchgang (85) aufweist, an den sich ein im Messgehäuse (88) verlaufender Schrägkanal (89) anschließt, der mit seinem anderen freien Ende auf die rückwärtige Stirnseite (90) des Messkolbens (91) führt.

3. Filtervorrichtung nach Anspruch 1 oder 2, **dadurch gekennzeichnet, dass** der Messkolben (91) mit einem Energiespeicher, wie einer Druckfeder (92), beaufschlagt ist, die den Messkolben (91) in rückwärtige Richtung zu verfahren sucht, und dass die vordere Stirnseite des Messkolbens (91) an ein Abschlussstück (93) des Messgehäuses (88) angrenzt, das einen Durchgang (94) als weiteren Teil der Kanalführung aufweist, an dem der Momentandruck auf der Filtratseite (17) ansteht.

4. Filtervorrichtung nach einem der vorstehenden Ansprüche, **dadurch gekennzeichnet, dass** der in den Sammelraum (65) mündende Teil (61) der Kanalführung in der Elementkappe (43) des Filterelements (13) das obere Ende des Filtermaterials (27) übergreift und parallel dem Deckelteil (71) nachfolgt und dass der andere Teil (57) der Kanalführung, rechtwinklig dazu angeordnet, von einem in Radialrichtung verlaufenden Aufnahmesteg (55) aufgenommen und auf die die Unfiltratseite bildende Innenseite (15) des Filterelements (13) geführt ist.

5. Filtervorrichtung nach einem der vorstehenden Ansprüche, **dadurch gekennzeichnet, dass** der Sammelraum (65) Bestandteil eines ringförmigen Abdichtsystems (79) ist, das außenumfangsseitig an einer Aufnahmekrone (49) angeordnet ist, die mittels eines Kranzes radial verlaufender Stege (47) gehalten ist, die sich an ein stirnseitiges Aufnahmeteil (45) für das obere Ende des Filtermaterials (27) anschließen, dass ein Aufnahmeteil (45) innenumfangsseitig zumindest teilweise von einem konisch verlaufenden Führungsteil (51) begrenzt ist, das sich vom Innenumfang des Aufnahmeteils (45) weg in die Innenseite (15) des Filterelements (13) erstreckt, und dass sich an der Innenseite des Führungsteils (51) die Stege (47) fortsetzen, deren einer den Aufnahmesteg (55) für den zur Unfiltratseite (15) verlaufenden Endteil (57) der Kanalführung bildet.

6. Filtervorrichtung nach Anspruch 5, **dadurch gekennzeichnet, dass** die Aufnahmekrone (49), die Stege (47, 55), das Aufnahmeteil (45) und das Führungsteil (51), einstückig miteinander verbunden, die Elementkappe (43) ausbilden.

7. Filtervorrichtung nach Anspruch 5 oder 6, **dadurch gekennzeichnet, dass** das Abdichtsystem außenumfangsseitig eine Formdichtung (79) aufweist, die eine Umfassungswand der Aufnahmekrone (49) der Elementkappe (43) umfasst.

8. Filtervorrichtung nach einem der vorstehenden Ansprüche, **dadurch gekennzeichnet, dass** der Filterkopf (3) an der Stelle des Eingriffs der Differenz-Druckmesseinrichtung (59) einen vorstehenden Anschlussbereich (69) aufweist, in den das Messgehäuse (88) stirnseitig eingeschraubt ist.

9. Filtervorrichtung nach einem der vorstehenden Ansprüche, **dadurch gekennzeichnet, dass** als Teil der Differenz-Druckmesseinrichtung (59), nach außen weiter vorstehend, sich an das insoweit geschlossen ausgebildete Messgehäuse (88) eine Auswerteeinheit (96, 98) anschließt, die insbesondere optisch einem Betrachter zu erkennen gibt, ob das im Filtrierbetrieb befindliche Filterelement (13) verblockt oder noch filterfähig ist.

10. Filtervorrichtung nach Anspruch 9, **dadurch gekennzeichnet, dass** der Messkolben (91) der Messeinrichtung (59) einen Permanentmagneten (95) aufweist, der im filterfähigen Zustand des Filterelements (13) entgegen der Wirkung eines Energiespeichers, insbesondere in Form einer Druckfeder (92), einen Permanentmagneten eines Auswertekolbens (96), der längsverfahrbar in einem Gehäuse der Auswerteeinheit (96, 98) geführt ist, in einer Position hält, die dieser in Richtung einer weiteren Position verlässt, sobald aufgrund des sinkenden Momentandrucks auf der vorderseitigen Stirnseite des Messkolbens (91), bedingt durch ein Verblocken des Filterelements (13), der Permanentmagnet (95) des Messkolbens (91) sich von dem Permanentmagneten des Auswertekolbens (96) wegbewegt.

## Claims

1. Filter apparatus with a filter housing (1) comprising a filter head (3) and a filter bowl (7) and with a filter element (13) received therein, said filter element separating an unfiltered medium side (15) from a filtrate side (17), and with a differential pressure measurement device (59), which at least displays a blockage of the filter element (13) during filtration operation and which comprises a measurement piston (91) that can be displaced longitudinally in a measurement housing (88), the pressure on the unfiltered medium side (15) at any moment in time being applied to one end face (90) of said piston and the pressure on the filtrate side (17) at any moment in time being applied to the opposite end face of said piston, said piston passing into the measurement housing (88) by means of at least one channel duct (57, 61, 65, 89) in each case, at least one part (57, 61) of the channel duct being arranged in an element cap (43) of the filter element (13), and the part (57, 61) of the channel duct that is arranged in the element cap (43) ending with one free end on the unfiltered medium side (15) of the filter element (13),
**characterised in that**
the part (57, 61) of the channel duct that is arranged in the element cap (43) ends with its other free end (63) in a collection chamber (65), which protrudes from the outer circumference of the element cap (43) and is delimited on opposite end faces in a sealing manner by a lid part (71) arranged on the upper side of the filter head (3) such that it can be removed on the one hand and on the other hand at the bottom by wall parts (67) of the filter head (3);
**in that** the collection chamber (65) forms part of the channel duct; and
**in that**, on the upper side opposite the wall part (67), the collection chamber (65) is delimited by the housing lid part (71), which comprises a radial projection (73) which extends over a radially protruding wall part (75) forming the side wall of the collection chamber (65).

2. Filter apparatus according to claim 1, **characterised in that**, as part of the channel duct, the bottom side of the collection chamber (65) comprises a passage formed in the filter head (3), an oblique channel (89) running in the measurement housing (88) being connected to said passage, the other free end of said channel leading to the rear end face (90) of the measurement piston (91).

3. Filter apparatus according to either claim 1 or claim 2, **characterised in that** an energy accumulator, such as a compression spring (92), is applied to the measurement piston (91), said compression spring attempting to move the measurement piston (91) backwards, and **in that** the front end face of the measurement piston (91) is adjacent to an end piece (93) of the measurement housing (88), said end piece comprising a passage (94) as a further part of the channel duct, the pressure on the filtrate side (17) at any moment in time being applied to said passage.

4. Filter apparatus according to any one of the preceding claims, **characterised in that** the part (61) of the channel duct in the element cap (43) of the filter element (13) that leads into the collection chamber (65) extends over the upper end of the filter material (27) and continues parallel to the lid part (71), and **in that** the other part (57) of the channel duct, arranged at right angles thereto, is received by a receiving web (55) running in the radial direction and is mounted on the inside (15) of the filter element (13), said side forming the unfiltered medium side.

5. Filter apparatus according to any one of the preceding claims, **characterised in that** the collection chamber (65) is part of an annular sealing system (79), which is arranged on the outer circumference of a receiving crown (49), which is held by means of a circle of radially extending webs (47), which are connected to a receiving part (45) on the end face for the upper end of the filter material (27), **in that** a receiving part (45) is delimited on its inner circumference at least partially by a conically extending guide part (51), which extends away from the inner circumference of the receiving part (45) to the inside (15) of the filter element (13), and **in that** the webs (47) continue on the inside of the guide part (51), one of said webs forming a receiving web (55) for the end part (57) of the channel duct extending to the unfiltered medium side (15).

6. Filter apparatus according to claim 5, **characterised in that** the receiving crown (49), the webs (47, 55), the receiving part (45) and the guide part (51), integrally connected to one another, form the element cap (43).

7. Filter apparatus according to either claim 5 or claim 6, **characterised in that** the sealing system comprises a moulded seal (79) on its outer circumference, said seal surrounding an enclosing wall for the receiving crown (49) of the element cap (43).

8. Filter apparatus according to any one of the preceding claims, **characterised in that** the filter head (3) comprises a protruding connection region (69) at the point at which the differential pressure measurement device (59) engages, the measurement housing (88) being screwed into the end face of said connection region.

9. Filter apparatus according to any one of the preceding claims, **characterised in that**, as part of the differential pressure measurement device (59), protruding further outwards, an evaluation unit (96, 98) is connected to the measurement housing (88), which is thus formed in a closed manner, said unit allowing an observer to detect, in particular by optical means, whether the filter element (13) is blocked or still able to filter during filtration operation.

10. Filter apparatus according to claim 9, **characterised in that** the measurement piston (91) of the measurement device (59) comprises a permanent magnet (95), which, when the filter element (13) is able to filter, against the action of an energy accumulator, in particular in the form of a compression spring (92), holds a permanent magnet of an evaluation piston (96), which is mounted in a housing of the evaluation unit (96, 98) such that it can be displaced longitudinally, in a position which said magnet leaves in the direction of a further position as soon as the permanent magnet (95) of the measurement piston (91) moves away from the permanent magnet of the evaluation piston (96) due to the falling pressure at that moment in time on the front side of the measurement piston (91) as a result of a blockage in the filter element (13).

## Revendications

1. Dispositif de filtration, comprenant une enveloppe (1) de filtre, ayant une tête (3) de filtre et un pot (7) de filtre, et un élément (13) filtrant, qui y est reçu et qui sépare un côté (15) de non-filtrat d'un côté (17) de filtrat, et comprenant un dispositif (59) de mesure d'une différence de pression, qui indique au moins un colmatage de l'élément (13) filtrant lors du fonctionnement du filtre et qui a un piston (91) de mesure, qui est guidé de manière à pouvoir se déplacer longitudinalement dans un boîtier (88) de mesure, qui est soumis d'un côté (90) frontal à la pression instantanée du côté (15) de non-filtrat et du côté frontal opposé à la pression instantanée du côté (17) de filtrat et qui parvient, respectivement par au moins une conduite (57, 61, 65, 89) en canal dans le boîtier (88) de mesure, au moins une partie (57, 61) de la conduite en canal étant disposée dans une coiffe (43) de l'élément (13) filtrant, et la partie (57, 61) de la conduite en canal qui est disposée dans la coiffe (43) se terminant par l'une de ses extrémités libres sur le côté (15) de non-filtrat de l'élément (13) filtrant,
**caractérisé**
**en ce que** la partie (57, 61) de la conduite en canal, qui est disposée dans la coiffe (43), se termine par son autre extrémité (63) libre en un espace (65) collecteur, qui fait saillie du pourtour extérieur de la coiffe (43) et qui est délimité sur des côtés frontaux opposés, d'une manière étanche, d'une part, par une partie (71) de couvercle disposée de manière à pouvoir être retirée sur le côté supérieur de la tête (3) du filtre et, d'autre part, au fond par des parties (67) de paroi de la tête (3) du filtre ;
**en ce que** l'espace (65) collecteur fait partie de la conduite en canal ; et
**en ce que**, du côté supérieur, opposé à la partie (67) de paroi, l'espace (65) collecteur est délimité par la partie (71) de couvercle d'enveloppe, qui a une indentation (73) radiale, qui mord sur la partie (75) de paroi en saillie radialement formant la paroi latérale de l'espace (65) collecteur.

2. Dispositif de filtration suivant la revendication 1, **caractérisé en ce que** l'espace (65) collecteur, a comme partie de la conduite en canal du côté du fond, un passage (85), qui est formé dans la tête (3) du filtre et auquel se raccorde un conduit (89) incliné, qui s'étend dans le boîtier (88) de mesure et qui mène, par son autre extrémité libre, au côté (90) frontal vers l'arrière du piston (91) de mesure.

3. Dispositif de filtration suivant la revendication 1 ou 2, **caractérisé en ce que** le piston (91) de mesure est soumis à un accumulateur d'énergie, comme un ressort (92) de compression, qui tend à déplacer le piston (91) de mesure dans le sens vers l'arrière, et **en ce que** le côté frontal avant du piston (91) de mesure est voisin d'une pièce (93) de fermeture du boîtier (88) de mesure, pièce qui a un autre passage (94), comme autre partie de la conduite en canal, passage où règne la pression instantanée du côté (17) du filtrat.

4. Dispositif de filtration suivant l'une des revendications précédentes, **caractérisé en ce que** la partie (61), débouchant dans l'espace (65) collecteur, de la conduite en canal mord, dans la coiffe (43) de l'élément (13) filtrant, l'extrémité supérieure du matériau (27) filtrant et suit parallèlement la partie (71) de couvercle, et **en ce que** l'autre partie (57) de la conduite en canal, disposée à angle droit à cela, est reçue par une entretoise (55) de réception s'étendant dans la direction radiale et est guidée du côté (15) intérieur, formant le côté du non-filtrat, de l'élément (13) filtrant.

5. Dispositif de filtration suivant l'une des revendications précédentes, **caractérisé en ce que** l'espace (65) collecteur est une partie constitutive d'un système (79) de fermeture annulaire, qui est disposée du côté du pourtour extérieur sur un anneau (49) de réception maintenu au moyen d'une couronne d'entretoises (47) s'étendant radialement, qui se raccorde à une partie (45) de réception du côté frontal de l'extrémité supérieure du matériau (27) filtrant, **en ce qu'**une partie (45) de réception est délimitée du côté du pourtour intérieur, au moins en partie, par une partie (51) de guidage s'étendant coniquement, qui, en s'éloignant du pourtour intérieur de la partie (45) de réception, s'étend dans le côté (15) intérieur de l'élément (13) filtrant, et ce que, du côté intérieur de la partie (51) de guidage, se poursuivent les entretoises (47), dont l'une forme l'entretoise (55) de réception de la partie (57) d'extrémité, s'étendant vers le côté (15) de non-filtrat, de la conduite en canal.

6. Dispositif de filtration suivant la revendication 5, **caractérisé en ce que** l'anneau (49) de réception, les entretoises (47, 55), la partie (45) de réception et la partie (51) de guidage, assemblés ensemble en une seule pièce, constituent la coiffe (43).

7. Dispositif de filtration suivant la revendication 5 ou 6, **caractérisé en ce que** le système d'étanchéité a, du côté du pourtour extérieur, une étanchéité (79) de forme, qui comprend une paroi de bordure de l'anneau (49) de réception de la coiffe (43).

8. Dispositif de filtration suivant l'une des revendications précédentes, **caractérisé en ce que** la tête (3) du filtre a, au point de la pénétration du dispositif (59) de mesure d'une différence de pression, une partie (69) de raccordement en saillie, dans laquelle le boîtier (88) de mesure est vissé du côté frontal.

9. Dispositif de filtration suivant l'une des revendications précédentes, **caractérisé en ce que**, comme partie du dispositif (59) de mesure de la différence de pression, plus en saillie vers l'extérieur, se raccorde au boîtier (88) de mesure constitué ainsi fermé une unité (96, 98) d'exploitation, qui permet à un observateur, notamment visuellement, de détecter si l'élément (13) filtrant se trouvant en fonctionnement de filtration est colmaté ou peut être encore en mesure de filtrer.

10. Dispositif de filtration suivant la revendication 9, **caractérisé en ce que** le piston (91) de mesure du dispositif (59) de mesure a un aimant (95) permanent, qui, lorsque l'élément (13) filtrant est en état de filtrer, maintient, à l'encontre de l'effet d'un accumulateur d'énergie, notamment sous la forme d'un ressort (92) de compression, un aimant permanent d'un piston (96) d'exploitation, qui est guidé de manière à pouvoir se déplacer longitudinalement dans un boîtier de l'unité (96, 98) d'exploitation, en une position que celui-ci quitte en direction d'une autre position, dès que, en raison de la pression instantanée qui s'abaisse du côté frontal du côté avant du piston (91) de mesure, en raison d'un colmatage de l'élément (13) filtrant, l'aimant (95) permanent du piston (91) de mesure s'éloigne de l'aimant permanent du piston (96) d'exploitation.
